# FASCICULE DE BREVET EUROPEEN

(11) **EP 3 233 740 B1**
(45) Date de publication et mention de la délivrance du brevet: **14.04.2021**
(21) Numéro de dépôt: 15821147.4
(22) Date de dépôt: 16.12.2015
(51) Int. Cl.: C03B 5/03

(54) **FOUR VERRIER ELECTRIQUE A ELECTRODES MOBILES**
ELEKTRISCHER GLASSCHMELZOFEN MIT BEWEGLICHEN ELEKTRODEN
ELECTRIC GLASS FURNACE WITH MOVABLE ELECTRODES

(30) Priorité: 19.12.2014 FR 1462960
(43) Date de publication de la demande: 25.10.2017
(73) Titulaire: SAINT-GOBAIN ISOVER, 92400 Courbevoie (FR)
(72) Inventeur: ADJOUA, Serge, 77500 Chelles (FR); CLATOT, Richard, 60700 Fleurines (FR); LOPEPE, Frédéric, 93110 Rosny sous Bois (FR); PIGEONNEAU, Franck, 91360 Epinay sour Orge (FR)
(74) Mandataire: Saint-Gobain Recherche
(86) Numéro de dépôt international: PCT/FR2015/053551
(87) Numéro de publication internationale: WO 2016/097607

(56) Documents cités:
- WO-A1-2013/098504
- CN-U- 201 485 370
- FR-A1- 2 599 734
- GB-A- 2 094 120
- US-A- 2 978 526
- US-A- 4 862 477
- US-A- 6 044 667

## Description

L'invention concerne le domaine des fours électriques pour la préparation de verre fondu.

Les fours verrier électriques utilisent des électrodes en contact avec les matières vitrifiables à fondre. Pour venir au contact avec les matières vitrifiables, on utilise comme électrode des matériaux conducteurs les plus résistants possible à la corrosion, comme le molybdène. Les températures mises en jeu dans le four sont cependant si élevées qu'une corrosion des électrodes ne manque pas de se produire, nécessitant leur remplacement régulier. Plus le verre est foncé, plus l'usure est rapide. En effet, un verre plus foncé nécessite une plus forte puissance électrique pour le chauffer, ce qui se traduit par de plus forte températures à la surface des électrodes, pouvant atteindre 1800°C. En pratique, l'usure des électrodes est contrôlée en limitant le niveau de production, en limitant la densité de courant ou en apportant des modifications à la composition chimique du verre. Les fours verriers concernés par la présente invention sont notamment ceux du type décrits dans WO2013/098504.

Les zones de contact entre le verre fondu et les électrodes sont les plus chaudes du four et sont également les lieux de mouvements de convection de la fonte de verre. Ces deux phénomènes contribuent fortement à l'usure des électrodes. Selon l'invention, on a eu l'idée de déplacer, au cours du temps, au moins une électrode des zones les plus chaudes vers des zones plus froides afin de réduire l'épaisseur de la couche limite thermique autour des électrodes. La conséquence immédiate de ce déplacement est une baisse de la température de peau de l'électrode en mouvement, ce qui entraîne une diminution de son usure. Grâce au déplacement d'électrode(s), le verre à leur contact est renouvelé en permanence et la couche limite thermique autour des électrodes est dissipée. Bien que la température du verre au voisinage des électrodes soit moins élevée, on conserve cependant une bonne qualité de verre.

Le document GB2094120 enseigne un four verrier électrique à voûte froide comprenant des électrodes plongeant dans les matières vitrifiables par le dessus et comprenant un dispositif motorisé de déplacement horizontal d'électrode apte à causer un mouvement horizontal cyclique d'une électrode en régime permanent.

Le document US4862477 décrit un four de fusion verrier à voûte froide comprenant des électrodes plongeant dans les matières vitrifiables par le dessus et comportant un dispositif motorisé permettant le déplacement horizontal des électrodes de façon cyclique en régime permanent, notamment à trajectoire circulaire.

Le four selon l'invention est notamment un four dit à voûte froide permettant de fondre des matières vitrifiables par la chaleur dégagée par effet joule à partir d'électrodes plongeant par le dessus dans les matières vitrifiables. Dans un four à voûte froide, la composition solide de matières premières vitrifiables est apportée par le dessus et forme une couche supérieure communément qualifiée de « croûte » recouvrant complètement le bain de matières en fusion. Cette croûte joue le rôle d'isolant thermique vis-à-vis de la voûte, d'où l'expression « à voûte froide ».

L'invention est applicable quel que soit le verre concerné et les conditions opératoires. Elle autorise un niveau de production plus élevé et mène à une baisse des coûts de production du fait de la plus faible usure des électrodes en mouvement ainsi que des réfractaires. L'invention concerne plus particulièrement la fabrication des verres absorbants et notamment ceux contenant de l'oxyde de fer.

Les électrodes sont au contact des matières vitrifiables pour les chauffer par effet joule. Les électrodes plongent dans les matières vitrifiables par le dessus en traversant le niveau de la surface des matières vitrifiables. Elles sont généralement verticales (leur axe est vertical) et gardent cette verticalité pendant le déplacement selon l'invention. Ces électrodes comprennent généralement une partie en molybdène ou en tungstène ou en graphite au contact des matières vitrifiables fondues. Il semble que les électrodes, notamment en molybdène, réagissent progressivement avec l'oxyde de fer présent dans les matières vitrifiables en favorisant la présence de FeO au détriment de Fe₂O₃, ledit FeO absorbant particulièrement les IR, ce qui va dans le sens d'une augmentation du gradient de température de la sole jusqu'en dessous de la croûte de matières premières. Au contact des électrodes, le Fe₂O₃ est réduit progressivement en FeO et le FeO se transforme lui-même progressivement en Fe. Ces deux réactions contribuent toutes deux à user l'électrode. Ainsi, l'usure même des électrodes, notamment en molybdène, renforce le caractère absorbant du verre, ce qui nécessite à son tour un chauffage plus élevé par les électrodes.

L'invention s'adresse en premier lieu aux fours présentant un rapport de la surface de matière fondu sur la plus grande hauteur de matière fondu comprise dans le domaine allant de 2 à 40. La surface de matière fondue est celle se trouvant, horizontalement, juste sous la croûte de matières premières. La plus grande hauteur de matière fondue est déterminée à la verticale entre la sole et jusque sous la croûte de matières premières. Avec de telles dimensions, une bonne homogénéité de composition est obtenue. L'homogénéité de composition est si bonne que le déplacement des électrodes selon l'invention n'apporte rien sur le plan de cette homogénéité. Ainsi, le déplacement des électrodes selon l'invention a pour principal rôle d'évacuer le FeO se formant inévitablement à proximité des électrodes. Grâce au mouvement des électrodes, la composition en matière fondue est renouvelée en permanence autour des électrodes, minimisant de ce fait le FeO à proximité immédiate des électrodes. Ainsi, grâce au mouvement des électrodes, la concentration locale en Fe₂O₃ à proximité immédiate des électrodes est augmentée au détriment de celle en FeO, ce qui va dans le sens d'une baisse de la température ainsi que dans le sens d'une baisse de la réaction de formation de Fe, ces deux facteurs allant dans le sens d'une réduction de l'usure des électrodes.

Les électrodes peuvent comprendre une partie en acier non en contact avec le verre, au-dessus des matières vitrifiables, reliées à une tension électrique. Le nombre d'électrodes est adapté en fonction de la taille du four et de la tirée (quantité de verre produite par unité de temps) du four. Elles peuvent être notamment au nombre de 3, 4, 5, 6. Généralement les électrodes sont alimentées en triphasé si elles sont au nombre de trois ou un multiple de trois. Généralement les électrodes sont alimentées en biphasé si elles sont au nombre de deux ou un multiple de deux.

Selon l'invention, les électrodes sont déplacées en cours de production en régime permanent de fonctionnement. Les électrodes ont un déplacement coordonné entre elles. Un déplacement possible pour au moins une électrode, voire pour toutes les électrodes, peut se faire, vue de dessus, selon une trajectoire circulaire ou ovale ou linéaire, ce qui recouvre la possibilité d'avoir une trajectoire de va-et-vient sur un arc de cercle ou un arc ovale ou un segment linéaire. Des essais industriels avec trois électrodes formant un triangle équilatéral vue de dessus et se déplaçant toutes selon une translation circulaire ont abouti à une réduction d'environ 40% de l'usure des électrodes. Les électrodes sont de préférence verticales et le déplacement selon l'invention est réalisé essentiellement et de préférence exclusivement à l'horizontale, en l'absence de composante verticale. En plus du déplacement à l'horizontale, le déplacement peut également comprendre une composante de déplacement verticale, mais cela n'est ni nécessaire ni souhaité. Le déplacement à l'horizontale des électrodes peut être réalisé grâce à un système de bielle-manivelle installé sur le bras de chaque électrode devant se déplacer.

D'autres types de déplacement sont possibles. Une électrode, voire chaque électrode, peut avoir une trajectoire linéaire vue de dessus. Lors de ce mouvement, les électrodes s'écartent puis se rapprochent l'une de l'autre, et ainsi de suite. Notamment, en vue de dessus, les électrodes, si elles sont au nombre de trois, peuvent former un triangle, notamment équilatéral, qui s'agrandit et se rapetisse, notamment de façon homothétique et de façon cyclique au cours du déplacement. Ce type de déplacement est notamment bien adapté aux fours rectangulaires ou carrés, les électrodes pouvant notamment aller et venir dans des angles du four ou se rapprocher et s'éloigner de paroi. Notamment, une configuration avantageuse est la combinaison d'un four circulaire à trois ou six électrodes alimentées en triphasé dont les segments virtuels les reliant (vue de dessus) forment un triangle régulier ou un hexagone régulier, le terme « régulier » impliquant que le polygone concerné est équilatéral et équiangulaire. Avantageusement, les électrodes sont à chaque moment toutes à la même distance des parois.

Le déplacement des électrodes produit une variation de la distance entre elles. Ce déplacement nécessite une adaptation du système de régulation électrique du four par rapport à la situation selon laquelle toutes les électrodes seraient fixes. En effet, la résistivité entre les électrodes dépend de leur éloignement et un déplacement des électrodes modifiant un écartement entre électrodes nécessite une régulation en puissance.

Toutes les électrodes se déplacent, le déplacement comprenant alternativement le rapprochement mutuel de toutes les électrodes et l'éloignement mutuel de toutes les électrodes. Les segments reliant virtuellement le centre des électrodes (vue de dessus) forment un polygone vue de dessus. On parle ici du plus grand polygone obtenu en reliant virtuellement le centre d'électrodes voisines. Au cours du déplacement des électrodes, ce polygone alternativement grandit et rapetisse, notamment de façon homothétique. Le déplacement des électrodes selon l'invention est de préférence tel que l'aire de ce polygone passe alternativement au-dessus de 12% et de préférence au-dessus de 15% de la surface de matière fondue (juste sous la croûte de matières premières) et en-dessous de 7% et de préférence en dessous de 5% de la surface de matière fondu. Chaque électrode a donc généralement un mouvement de va et vient sur le même segment de droite vue de dessus. Au cours de ce déplacement d'agrandissement et de rapetissement, le polygone est de préférence déformé de façon homothétique. Au cours de ce déplacement, de préférence, la distance entre chaque électrode et la paroi du four est la même pour toutes les électrodes. De la sorte, toutes les électrodes s'usent de façon identique. Au cours de ce déplacement, de préférence, la densité de courant à la surface d'une électrode ne dépasse pas 3,5 ampères par cm². Cette limite n'est pas dépassée en préservant une distance suffisante entre électrodes. Le déplacement selon l'invention produit alternativement un rapprochement des électrodes vers le centre du four vue de dessus, puis un rapprochement des électrodes vers les parois du four. Ce mouvement garantit une excellente homogénéité de température de la matière fondue dans le four. En effet, les lignes de courant préférentielles suivent les segments virtuels entre électrodes voisines (côtés du polygone) car le courant passe préférentiellement par les trajets les plus courts. En rapetissant et agrandissant alternativement le polygone dont le centre des électrodes forment les sommets, les lignes de courant préférentielles balayent avantageusement une grande partie de la surface de matières vitrifiables fondues (vue de dessus).

La vitesse du déplacement peut notamment être comprise dans le domaine allant de 50 à 500 mm par minute à l'horizontale. Plongeant par le dessus, les électrodes traversent la croûte de matières premières. Au cours de leur déplacement, elles fissurent cette croûte, ce qui peut se traduire par une dégradation non-souhaitée du caractère d'isolant thermique de la croûte. Cette dégradation est plus ou moins forte selon la vitesse des électrodes. On a déterminé que cette vitesse était optimale si pour au moins 80% du trajet (c'est-à-dire de la distance) effectué par chaque électrode, la vitesse de l'électrode était comprise dans le domaine allant de 80 à 250 mm par minute. La vitesse de l'électrode peut passer par 0 mm/min lorsqu'elle a un mouvement linéaire de va-et-vient et passe par une position extrême la plus proche d'une paroi ou la plus proche d'une autre électrode. Au-delà de 250 mm/minutes, la croûte est arrachée et une trop grande surface de matière fondue rayonne au travers de la zone ainsi découverte. En effet, la nouvelle matière première projetée à la surface ne parvient pas à colmater suffisamment rapidement la zone découverte. Les vitesses données ci-dessus sont celles de la composante horizontale du déplacement, ce qui n'exclut pas l'existence d'une composante verticale du déplacement. De préférence, on évite un rapprochement entre une électrode et une paroi en réfractaire inférieur à 300 mm.

Le four selon l'invention est équipé d'un dispositif motorisé occasionnant le déplacement des électrodes. Le déplacement concerne toutes les électrodes, ce qui signifie que toutes les électrodes au contact des matières vitrifiables se déplacent. Le déplacement est motorisé dans la mesure où la force nécessaire au déplacement d'électrode(s) est conférée par un moteur. L'invention concerne donc en premier lieu un four verrier électrique à voûte froide selon la revendication 1, comprenant des électrodes plongeant dans les matières vitrifiables par le dessus et comprenant un dispositif motorisé de déplacement horizontal des électrodes. Le déplacement des électrodes est réalisé selon une trajectoire comprenant au moins une composante horizontale, les électrodes restant généralement verticales au cours dudit déplacement. Ainsi, en vue de dessus, les électrodes sont déplacées selon une trajectoire au travers de la surface de matières vitrifiables. Le déplacement des électrodes est cyclique en vue de dessus au travers de la surface de matières vitrifiables, c'est-à-dire que l'électrode en mouvement repasse continuellement par le même endroit au cours de la réalisation de sa trajectoire. Le déplacement des électrodes est réalisé alors que le four est en régime permanent, c'est-à-dire après la phase de démarrage, au cours d'une fabrication en continue d'une composition donnée de verre fondu. Une telle fabrication est généralement réalisée à tirée constante pendant plusieurs jours, généralement au moins trois jours. Au cours de cette production, le déplacement des électrodes est généralement réalisé de sorte que chaque électrode effectue 2 à 10 cycles par heure, un cycle étant le temps écoulé entre deux passages de l'électrode par sa position la plus proche d'une paroi. Le déplacement d'au moins une électrode peut aussi être réalisé pendant la phase de démarrage, pendant une période de réglage ou une phase d'arrêt, ces différentes périodes n'étant pas considérées comme faisant partie de la période de fabrication en régime permanent.

Grâce à l'invention, une température plus homogène du verre fondu dans le four est obtenue. Cette bonne homogénéité permet de modérer la puissance électrique délivrée aux électrodes afin d'obtenir une température donnée dans le verre fondu. L'invention mène ainsi à une usure moins forte des électrodes en mouvement et permet une baisse de la consommation spécifique du four notamment pour les verres absorbant les infra-rouge et, par conséquent, du niveau thermique dans le four. En effet, plus le verre est absorbant, plus les radiations émanant des électrodes sont freinées et parcourent de faibles distances dans le verre. La présence d'oxyde de fer dans la composition fondue contribue à l'absorption des infrarouges. Ainsi, l'invention est particulièrement adaptée lorsque les matières vitrifiables (et donc également le verre fondu) contiennent au moins 2% en poids d'oxyde de fer (somme de toutes les formes d'oxyde de fer) et même au moins 3% et même au moins 4% en poids d'oxyde de fer, notamment lorsque plus de 50% de la masse de l'oxyde de fer présent dans les matières premières vitrifiables introduites sont sous forme de Fe₂O₃, ce qui est habituellement le cas. Les matières premières contenant de l'oxyde de fer introduites dans ce type de four par l'homme du métier contiennent toujours du Fe₂O₃. Par ailleurs, l'équilibre thermodynamique entre les différents oxydes assure la présence de Fe₂O₃ dans le verre fondu. Généralement, les matières vitrifiables contiennent moins de 20% en poids d'oxyde de fer (somme de toutes les formes d'oxyde de fer).

Le procédé selon l'invention est notamment adapté lorsque les matières vitrifiables (et donc également le verre fondu) contiennent de 1 à 30% en poids d'alumine, et même 15 à 30% en poids d'alumine. Par exemple, il peut être utilisé pour préparer des verres à transformer en fibres aux compositions décrites dans l'un ou l'autre des documents WO99/57073, WO99/56525, WO00/17117, WO2005/033032, WO2006/103376. Un verre absorbant moins les IR est par exemple un verre du type borosilicate. Un verre absorbant plus les IR est par exemple un verre automobile utilisé comme écran solaire pour les toits ouvrants.

Le four selon l'invention peut être destiné à la préparation d'un verre à fibrer. Dans le cadre de la présente invention, le terme « verre » recouvre les compositions souvent qualifiées de « roche » notamment dans le cadre de la préparation d'une laine de roche. La température de fibrage idéale dépend de la composition du verre fondu. Généralement, on cherche à ce que sa viscosité au moment du fibrage soit comprise entre 25 Pa.s et 120 Pa.s.

Les matières vitrifiables introduites (et donc également le verre fondu) peuvent avoir une composition (composition A) comprenant :
SiO₂ : 35 à 80% en poids,
Al₂O₃ : 0 à 30% en poids,
CaO+MgO :2 à 35% en poids,
Na₂O+K₂O : 0 à 20% en poids,
étant entendu qu'en général,
SiO₂+Al₂O₃ est compris dans le domaine allant de 50 à 80% en poids et que Na₂O+K₂O+B₂O₃ est compris dans le domaine allant de 5 à 30% en poids.

Les matières vitrifiables introduites (et donc également le verre fondu) peuvent correspondre à la composition d'une laine de verre (composition B) et comprendre:
SiO₂ : 50 à 75% en poids
Al₂O₃ : 0 à 8% en poids
CaO+MgO : 2 à 20% en poids
Oxyde de fer : 0 à 3% en poids
Na₂O+K₂O : 12 à 20% en poids
B₂O₃ : 2 à 10% en poids.

Les matières vitrifiables introduites (et donc également le verre fondu) peuvent aussi correspondre à la composition d'une laine de verre riche en alumine (composition C) et comprendre:
SiO₂ : 35 à 60% en poids
Al₂O₃ : 10 à 30% en poids
CaO+MgO : 10 à 35% en poids
Oxyde de fer : 2 à 10% en poids
Na₂O+K₂O : 0 à 20% en poids.

Le verre fondu est évacué du four le cas échéant par une sortie latérale pour être dirigé vers un dispositif de transformation, notamment un dispositif de fibrage. La température du verre fondu évacué du four est choisie comme étant supérieure à la température de dévitrification de ladite matière. Généralement, la température du verre fondu sortant du four est comprise entre 850 et 1700°C. Pour un verre fondu riche en alumine, comprenant notamment au moins 10% en poids d'alumine (notamment la composition C ci-dessus décrite), voire au moins 15% en poids d'alumine, voire notamment 15 à 30% en poids d'alumine, la température du verre fondu sortant du four est généralement comprise entre 1200 et 1700°C.

Le four peut être circulaire. La sole du four peut être plate ou peut comprendre une surface inclinée. Une surface inclinée de sole permet d'entrainer la matière vitrifiable fondue vers le point le plus bas de la sole en début de fusion. En effet, il est avantageux de rassembler le faible volume de matière vitrifiable fondue au début du remplissage du four pour former un point chaud accumulant la chaleur. Cela permet d'aller plus vite en début de remplissage et en quelque sorte d'amorcer le fonctionnement du four.

L'intérieur du four est muni de réfractaires venant en contact avec les matières vitrifiables, tant au niveau de la sole que de la paroi latérale. La paroi latérale peut comprendre une enveloppe métallique extérieure en contact avec l'air ambiant. Cette enveloppe métallique comprend en générale deux cloisons entre lesquelles circule de l'eau de refroidissement.

Le fait de plonger les électrodes par le dessus concourt à favoriser un gradient de température montant du bas vers le haut, du fait même de ce que les électrodes chauffent en haut, combiné en plus à la formation de FeO préférentiellement autour des électrodes, donc également en haut. La température baisse ensuite rapidement vers le haut dans la croûte surnageante de matières premières. Le four n'est généralement pas équipé de moyens d'agitation des matières vitrifiables (pas d'agitateur mécanique ni de brûleur immergé) sauf éventuellement du type bouillonneur. Les électrodes en déplacement ne sont pas considérées comme étant un moyen d'agitation. En effet, le déplacement des électrodes doit dégrader le moins possible la croûte de matières premières en surface. C'est pourquoi le déplacement des électrodes est lent. C'est pourquoi également le mouvement des électrodes est essentiellement horizontal et de préférence exclusivement horizontal, sans composante verticale. On préfère en effet ne pas mélanger par le mouvement des électrodes des strates horizontales de matière vitrifiable. Ainsi, le déplacement selon l'invention est réalisé à une vitesse suffisamment faible pour conserver une croûte complète de matière première, c'est-à-dire recouvrant toute la surface de verre fondu dans le four.

Le four est équipé de moyens d'introduction des matières vitrifiables. Celles-ci sont généralement en poudre, voire en granulés, généralement jusqu'à un diamètre de 10 mm. Les matières vitrifiables sont réparties de façon homogène sur toute la surface interne du four pour former une croûte recouvrant les matières fondues. Comme moyen d'introduction des matières premières vitrifiables, on peut utiliser un cône tournant au-dessus de la surface interne du four. On fait tomber les matières vitrifiables sur le cône tournant dont la rotation les projette de façon uniforme sur toute la surface interne du four. Les matières vitrifiables non encore fondues forment une croûte en surface au-dessus des matières vitrifiables fondues. Cette croûte forme un écran thermique limitant les pertes thermiques par le dessus. Grâce à cela, la voûte du four peut être en simple acier chaudronné, sans moyen de refroidissement particulier. La surface interne du four, c'est-à-dire la surface de matière vitrifiable vue de dessus dans le four hors canal pour la sortie du verre fondu, peut notamment être comprise dans le domaine allant de 1 à 25 m² et généralement dans le domaine allant de 3 à 20 m². En fonctionnement, la profondeur de matières vitrifiables (fondues + non fondues) est généralement comprise entre 20 et 100 cm. La tirée en matières vitrifiables fondues peut notamment être comprise entre 5 et 100 tonnes par jour. En régime permanent de fonctionnement, du verre est produit en continu et est évacué en continu par une sortie. Le verre fondu produit dans le four peut être évacué du four par une sortie telle qu'une ouverture dans une paroi latérale. La sortie est généralement reliée à un canal amenant le verre fondu à un dispositif de transformation comme un dispositif de fibrage.

L'invention concerne également un dispositif de fabrication de fibres de verre comprenant un four selon l'invention et un dispositif de fibrage alimenté en verre fondu provenant dudit four par un canal.

L'invention concerne également un procédé de fabrication de verre fondu par le four selon l'invention comprenant la fusion de matières vitrifiables par chauffage électrique par les électrodes, un déplacement motorisé horizontal cyclique coordonné des électrodes, étant réalisé pendant le fonctionnement en régime permanent dudit four, le déplacement coordonné des électrodes comprenant alternativement le rapprochement mutuel de toutes les électrodes et l'éloignement mutuel de toutes les électrodes. Selon ce procédé, le verre, fabriqué en continu, peut comprendre au moins 2% en poids d'oxyde de fer, voire même au moins 3% en poids d'oxyde de fer, voire même au moins 4% en poids d'oxyde de fer, plus de 50% de la masse de l'oxyde de fer contenu dans les matières premières étant introduites dans le four sous forme Fe₂O₃. Selon ce procédé, toutes les électrodes peuvent être mobiles et suivre un déplacement comprenant alternativement le rapprochement mutuel de toutes les électrodes et l'éloignement mutuel de toutes les électrodes. Les segments reliant le centre des électrodes forment un polygone, vue de dessus, et l'aire de ce polygone passe, au cours du déplacement, alternativement de préférence au-dessus de 12% et de préférence au-dessus de 15% de la surface de matières vitrifiables fondues et de préférence en-dessous de 7% et de préférence en-dessous de 5% de la surface de matières vitrifiables fondues.

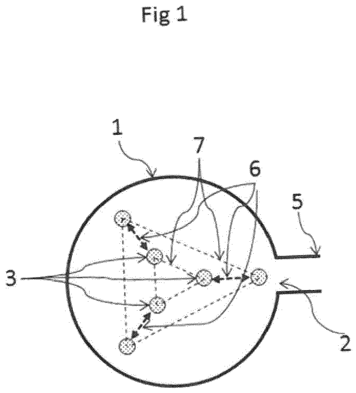

La figure 1 représente un four électrique selon l'invention vue de dessus. Il s'agit d'un four dont la cuve 1 est circulaire. II comprend une sortie 2 dans sa paroi latérale pour l'évacuation du verre fondu par un canal 5. Le four est équipé de trois électrodes 3, lesquelles forment vue de dessus les sommets d'un triangle équilatéral. Un dispositif motorisé non représenté fait décrire aux électrodes les déplacements linéaires vue de dessus symbolisés par des flèches 6. Chaque flèche 6 relie la position extrême d'une électrode dans ses déplacements linéaires. Ces déplacements occasionnent une variation des distances entre électrodes. Ce type de déplacement est aussi bien adapté aux fours rectangulaires ou carrés. Vu de dessus, les segments 7 entre les centres des électrodes forment un polygone du type triangle (traits en pointillés). Ce triangle est petit lorsque les électrodes sont proches les unes des autres et grand lorsque les électrodes sont éloignées les unes des autres. Le mouvement des électrodes est synchrone, c'est-à-dire qu'elles se déplacent toutes en même temps vers le centre du four et qu'elles se rapprochent toutes en même temps des parois. Le déplacement comprend alternativement le rapprochement mutuel de toutes les électrodes et l'éloîgnement mutuel de toutes les électrodes. Le passage d'un petit à un grand triangle est réalisé avec homothétie. Toutes les électrodes se rapprochent et s'écartent alternativement des parois tout en restant toujours, entre elles, à la même distance des parois. L'aire de matières premières vitrifiables dans le four était de 3 m² vue de dessus. La hauteur de verre fondu était de 300 mm sous la croûte de matières premières non fondues. Le verre fondu fabriqué avait la composition suivante :
SiO₂ : 43,3% en poids
Al₂O₃ : 21,1% en poids
CaO+MgO : 17,4% en poids
Oxyde de fer : 5,8% en poids (dont 95% introduit sous forme de Fe₂O₃)
Na₂O+K₂O :11% en poids.

Le verre sortait du four à la température de 1234 °C.

On a pu observer grâce à des mesures de température
1) d'une part sous la croûte surnageante de matières premières, à 20 mm de la paroi réfractaire, et en fonction de la profondeur sous ladite croûte, et
2) d'autre part à différentes distances (en mm) de la paroi réfractaire juste sous la croûte de matières premières,
que la température des matières vitrifiables fondues dans le four était beaucoup plus homogène en comparaison avec la situation selon laquelle les électrodes sont fixes. Le déplacement des électrodes selon l'invention réduit fortement l'augmentation de la de la température à proximité immédiate des électrodes, dans la couche limite thermique les entourant. Une réduction de l'usure des électrodes de l'ordre de 40% a été observé dans le cas du dispositif à électrodes mobiles par rapport au dispositif à électrodes fixes, toutes conditions par ailleurs identiques.

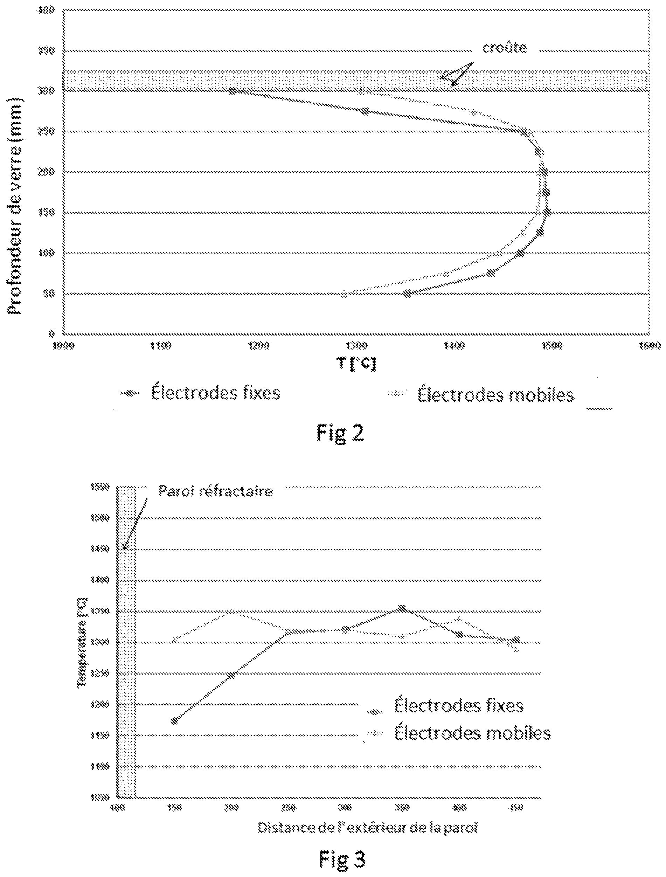

Les figures 2 et 3 comparent des distributions de température dans le cas d'électrodes fixes et dans le cas d'électrodes mobiles selon l'invention, toutes autres conditions étant identiques. Ces figures n'ont pas pour objet de décrire l'augmentation très forte de la température à proximité immédiate des électrodes, dans la couche limite thermique les entourant. Le déplacement des électrodes selon l'invention réduit fortement l'augmentation de la température à proximité immédiate des électrodes, dans la couche limite thermique les entourant.

## Revendications

1. Four verrier électrique (1) à voûte froide comprenant des électrodes (3) plongeant dans les matières vitrifiables par le dessus et comprenant un dispositif motorisé permettant le déplacement (4) coordonné horizontal et cyclique des électrodes (3) en régime permanent de fonctionnement du four, **caractérisé en ce que** ledit déplacement (7) coordonné des électrodes comprend alternativement le rapprochement mutuel de toutes les électrodes et l'éloignement mutuel de toutes les électrodes, ledit four comprenant un système de régulation de l'alimentation électrique des électrodes adapté audit déplacement.

2. Four selon la revendication précédente, **caractérisé en ce que** le déplacement peut être exclusivement horizontal.

3. Four selon l'une des revendications précédentes, **caractérisé en ce que** le déplacement d'au moins une électrode peut suivre une trajectoire linéaire (7), circulaire (4) ou ovale, vue de dessus.

4. Four selon l'une des revendications précédentes, **caractérisé en ce que** les segments (7) reliant le centre des électrodes forment un polygone, vue de dessus, l'aire de ce polygone passant, au cours du déplacement, alternativement au-dessus de 12% et de préférence au-dessus de 15% de la surface de matières vitrifiables fondues et en-dessous de 7% et de préférence en-dessous de 5% de la surface de matières vitrifiables fondues.

5. Four selon l'une des revendications précédentes, **caractérisé en ce que**, vue de dessus les segments reliant le centre des électrodes forment un polygone, ce polygone se déformant de façon homothétique au cours du déplacement.

6. Four selon l'une des revendications précédentes, **caractérisé en ce que** les électrodes peuvent être à chaque moment toutes à la même distance des parois.

7. Four selon l'une des revendications précédentes, **caractérisé en ce qu'**au cours du déplacement, pour 80% du trajet effectué par chaque électrode, la vitesse de l'électrode peut être comprise dans le domaine allant de 80 à 250 mm par minute.

8. Four selon l'une des revendications précédentes, **caractérisé en ce que** le déplacement d'au moins une électrode peut être réalisé à une vitesse suffisamment faible pour conserver une croûte complète de matière première.

9. Four selon l'une des revendications précédentes, **caractérisé en ce que** la surface de matière vitrifiable dans le four est comprise dans le domaine allant de 1 à 25 m², notamment dans le domaine allant de 3 à 20 m².

10. Four (1) selon l'une des revendications précédentes, **caractérisé en ce qu'**il est circulaire.

11. Four selon l'une des revendications précédentes, **caractérisé en ce que** rapport de la surface de matière fondu sur la plus grande hauteur de matière fondu est comprise dans le domaine allant de 2 à 40.

12. Four selon l'une des revendications précédentes, **caractérisé en ce que** les électrodes (3) sont au nombre de trois ou un multiple de trois et sont alimentées en triphasé.

13. Four selon l'une des revendications précédentes, **caractérisé en ce que** la partie des électrodes en contact avec les matières vitrifiables fondues est en molybdène ou en tungstène ou en graphite.

14. Dispositif de fabrication de fibres de verre comprenant un four de l'une des revendications précédentes et un dispositif de fibrage alimenté en verre fondu provenant dudit four par un canal (5).

15. Procédé de fabrication de verre fondu comprenant la fusion de matières vitrifiables par chauffage électrique par des électrodes, un déplacement motorisé horizontal cyclique coordonné des électrodes étant réalisé pendant le fonctionnement en régime permanent dudit four, **caractérisé en ce que** la fabrication est réalisée par le four de l'une des revendications précédentes de four, le déplacement (7) coordonné des électrodes comprenant alternativement le rapprochement mutuel de toutes les électrodes et l'éloignement mutuel de toutes les électrodes.

16. Procédé selon la revendication précédente, **caractérisé en ce que** le déplacement est réalisé de sorte que chaque électrode effectue 2 à 10 cycles par heure.

17. Procédé selon l'une des revendications précédentes, **caractérisé en ce que** le déplacement est exclusivement horizontal.

18. Procédé selon l'une des revendications précédentes de procédé, **caractérisé en ce que** le déplacement d'au moins une électrode est réalisé à une vitesse comprise dans le domaine allant de 50 à 500 mm par minute à l'horizontale.

19. Procédé selon l'une des revendications précédentes de procédé, **caractérisé en ce que** le déplacement d'au moins une électrode est réalisé à une vitesse suffisamment faible pour conserver une croûte complète de matière première.

20. Procédé selon l'une des revendications précédentes de procédé, **caractérisé en ce que** la tirée du four est constante en régime permanent de fonctionnement pendant au moins trois jours.

21. Procédé selon l'une des revendications précédentes de procédé, **caractérisé en ce que** les matières vitrifiables comprennent :
SiO₂ : 35 à 80% en poids,
Al₂O₃ : 0 à 30% en poids,
CaO+MgO : 2 à 35% en poids,
Na₂O+K₂O : 0 à 20% en poids.

22. Procédé selon l'une des revendications précédentes de procédé, **caractérisé en ce que** le verre fondu sort du four à une température comprise entre 850 et 1700°C.

23. Procédé selon l'une des revendications précédentes de procédé, **caractérisé en ce que** les matières vitrifiables contiennent au moins 2% en poids d'oxyde de fer, voire même au moins 3% en poids d'oxyde de fer, voire même au moins 4% en poids d'oxyde de fer.

24. Procédé selon la revendication précédente, **caractérisé en ce que** les matières vitrifiables comprennent :
SiO₂ : 35 à 60% en poids
Al₂O₃ : 10 à 30% en poids
CaO+MgO : 10 à 35% en poids
Oxyde de fer : 2 à 10% en poids
Na₂O+K₂O : 0 à 20% en poids.

25. Procédé selon l'une des deux revendications précédentes, **caractérisé en ce que** plus de 50% de la masse de l'oxyde de fer contenu dans les matières premières introduites dans le four est sous forme Fe₂O₃.

26. Procédé selon la revendication précédente, **caractérisé en ce que** le verre fondu sort du four à une température comprise entre 1200 et 1700°C.

## Patentansprüche

1. Elektrischer Glasschmelzofen (1) mit kaltem Gewölbe, umfassend Elektroden (3), die von oben in die verglasbaren Materialien eintauchen, und umfassend eine motorbetriebene Vorrichtung, welche die horizontal und zyklisch koordinierte Verschiebung (4) der Elektroden (3) im Dauerbetriebszustand des Ofens ermöglicht, **dadurch gekennzeichnet, dass** die koordinierte Verschiebung (7) der Elektroden abwechselnd die gegenseitige Annäherung aller Elektroden und die gegenseitige Distanzierung aller Elektroden umfasst, wobei der Ofen ein Regulierungssystem der Stromversorgung der an die Verschiebung angepassten Elektroden umfasst.

2. Ofen nach dem vorstehenden Anspruch, **dadurch gekennzeichnet, dass** die Verschiebung ausschließlich horizontal erfolgen kann.

3. Ofen nach einem der vorstehenden Ansprüche, **dadurch gekennzeichnet, dass** die Verschiebung mindestens einer Elektrode von oben gesehen einer linearen (7), kreisförmigen (4) oder ovalen Bahn folgen kann.

4. Ofen nach einem der vorstehenden Ansprüche, **dadurch gekennzeichnet, dass** die den Mittelpunkt der Elektroden verbindenden Segmente (7) von oben gesehen ein Polygon bilden, wobei die Fläche dieses Polygons im Laufe der Verschiebung abwechselnd über 12 % und vorzugsweise über 15 % der Oberfläche der geschmolzenen verglasbaren Materialien und unter 7 % und vorzugsweise unter 5 % der Oberfläche der geschmolzenen verglasbaren Materialien durchläuft.

5. Ofen nach einem der vorstehenden Ansprüche, **dadurch gekennzeichnet, dass** die den Mittelpunkt der Elektroden verbindenden Segmente von oben gesehen ein Polygon bilden, wobei sich dieses Polygon im Laufe der Verschiebung auf homothetische Weise verformt.

6. Ofen nach einem der vorstehenden Ansprüche, **dadurch gekennzeichnet, dass** die Elektroden jederzeit alle im gleichen Abstand von den Wänden vorliegen können.

7. Ofen nach einem der vorstehenden Ansprüche, **dadurch gekennzeichnet, dass** für 80 % der von jeder Elektrode zurückgelegten Strecke die Elektrodengeschwindigkeit im Laufe der Verschiebung im Bereich von 80 bis 250 mm pro Minute liegen kann.

8. Ofen nach einem der vorstehenden Ansprüche, **dadurch gekennzeichnet, dass** die Verschiebung mindestens einer Elektrode mit einer Geschwindigkeit erfolgen kann, die gering genug ist, um eine vollständige Kruste des Rohmaterials aufrechtzuerhalten.

9. Ofen nach einem der vorstehenden Ansprüche, **dadurch gekennzeichnet, dass** die Oberfläche des verglasbaren Materials in dem Ofen im Bereich von 1 bis 25 m², insbesondere im Bereich von 3 bis 20 m² liegt.

10. Ofen (1) nach einem der vorstehenden Ansprüche, **dadurch gekennzeichnet, dass** er kreisförmig ist.

11. Ofen nach einem der vorstehenden Ansprüche, **dadurch gekennzeichnet, dass** das Verhältnis der Oberfläche des geschmolzenen Materials zur größten Höhe des geschmolzenen Materials im Bereich von 2 bis 40 liegt.

12. Ofen nach einem der vorstehenden Ansprüche, **dadurch gekennzeichnet, dass** die Elektroden (3) drei oder ein Vielfaches von drei sind und dreiphasig versorgt werden.

13. Ofen nach einem der vorstehenden Ansprüche, **dadurch gekennzeichnet, dass** der Teil der Elektroden, der mit den geschmolzenen verglasbaren Materialien in Kontakt ist, aus Molybdän oder aus Wolfram oder aus Graphit besteht.

14. Vorrichtung zur Herstellung von Glasfasern, umfassend einen Ofen nach einem der vorstehenden Ansprüche und eine Zerfaserungsvorrichtung, die über einen Kanal (5) mit geschmolzenem Glas, das aus dem Ofen stammt, versorgt wird.

15. Verfahren zur Herstellung von geschmolzenem Glas, umfassend das Schmelzen von verglasbaren Materialien durch elektrisches Erwärmen mittels Elektroden, wobei eine motorbetriebene horizontale zyklisch koordinierte Verschiebung der Elektroden im Dauerbetriebszustand des Ofens erfolgt, **dadurch gekennzeichnet, dass** die Herstellung durch den Ofen nach einem der vorstehenden Ansprüche des Ofens erfolgt, wobei die koordinierte Verschiebung (7) der Elektroden abwechselnd die gegenseitige Annäherung aller Elektroden und die gegenseitige Distanzierung aller Elektroden umfasst.

16. Verfahren nach dem vorstehenden Anspruch, **dadurch gekennzeichnet, dass** die Verschiebung so erfolgt, dass jede Elektrode 2 bis 10 Zyklen pro Stunde absolviert.

17. Verfahren nach einem der vorstehenden Ansprüche, **dadurch gekennzeichnet, dass** die Verschiebung ausschließlich horizontal erfolgt.

18. Verfahren nach einem der vorstehenden Verfahrensansprüche, **dadurch gekennzeichnet, dass** die Verschiebung mindestens einer Elektrode mit einer Geschwindigkeit erfolgt, die in dem Bereich von 50 bis 500 mm pro Minute in der Horizontalen liegt.

19. Verfahren nach einem der vorstehenden Verfahrensansprüche, **dadurch gekennzeichnet, dass** die Verschiebung mindestens einer Elektrode mit einer Geschwindigkeit erfolgt, die gering genug ist, um eine vollständige Kruste des Rohmaterials aufrechtzuerhalten.

20. Verfahren nach einem der vorstehenden Verfahrensansprüche, **dadurch gekennzeichnet, dass** der Auszug aus dem Ofen im Dauerbetriebszustand während mindestens drei Tagen konstant ist.

21. Verfahren nach einem der vorstehenden Verfahrensansprüche, **dadurch gekennzeichnet, dass** die verglasbaren Materialien umfassen:
SiO₂: 35 bis 80 Gew.-%,
Al₂O₃: 0 bis 30 Gew.-%,
CaO+MgO: 2 bis 35 Gew.-%,
Na₂O+K₂O: 0 bis 20 Gew.-%.

22. Verfahren nach einem der vorstehenden Verfahrensansprüche, **dadurch gekennzeichnet, dass** das geschmolzene Glas den Ofen mit einer Temperatur im Bereich zwischen 850 und 1700 °C verlässt.

23. Verfahren nach einem der vorstehenden Verfahrensansprüche, **dadurch gekennzeichnet, dass** die verglasbaren Materialien mindestens 2 Gew.-% Eisenoxid oder sogar mindestens 3 Gew.-% Eisenoxid oder sogar mindestens 4 Gew.-% Eisenoxid enthalten.

24. Verfahren nach dem vorstehenden Anspruch, **dadurch gekennzeichnet, dass** die verglasbaren Materialien umfassen:
SiO₂: 35 bis 60 Gew.-%
Al₂O₃: 10 bis 30 Gew.-%
CaO+MgO: 10 bis 35 Gew.-%
Eisenoxid: 2 bis 10 Gew.-%
Na₂O+K₂O: 0 bis 20 Gew.-%.

25. Verfahren nach einem der zwei vorstehenden Ansprüche, **dadurch gekennzeichnet, dass** mehr als 50 % der Masse des Eisenoxids, das in den Rohmaterialien enthalten ist, das in den Ofen eingebracht wird, in Form von Fe₂O₃ vorliegt.

26. Verfahren nach dem vorstehenden Anspruch, **dadurch gekennzeichnet, dass** das geschmolzene Glas den Ofen mit einer Temperatur im Bereich zwischen 1200 und 1700 °C verlässt.

## Claims

1. A cold-top electric glass furnace (1) comprising electrodes that submerge into the batch materials via the top and comprising a motorized device for coordinated horizontal and cyclic movement (4) of the electrodes (3) during the steady-state operation of said furnace, **characterized in that** said coordinated movement (7) alternately comprises the mutual coming together of all the electrodes and the mutual moving apart of all the electrodes, the furnace comprising an electric control system adapted to said movement.

2. The furnace as claimed in the preceding claim, **characterized in that** the movement can be exclusively horizontal.

3. The furnace as claimed in either of the preceding claims, **characterized in that** the movement of at least one electrode can follow a linear (7), circular (4) or oval trajectory, when seen from above.

4. The furnace as claimed in either of the preceding claims, **characterized in that** the segments connecting the center of the electrodes form a polygon, when seen from above, the area of this polygon changing, during the movement, alternately to over 12% and preferably to over 15% of the surface area of molten batch materials and to below 7% and preferably to below 5% of the surface area of molten batch materials.

5. The furnace as claimed in either of the preceding claims, **characterized in that**, when seen from above, the segments connecting the center of the electrodes form a polygon, this polygon deforming homothetically during the movement.

6. The furnace as claimed in one of the three preceding claims, **characterized in that** the electrodes can be, at any moment, all at the same distance from the walls.

7. The furnace as claimed in one of the preceding claims, **characterized in that** during the movement, for 80% of the distance travelled by each electrode, the speed of the electrode can be within the range extending from 80 to 250 mm per minute.

8. The furnace as claimed in one of the preceding claims, **characterized in that** the movement of at least one electrode can be carried out at a slow enough speed to retain a complete crust of raw material.

9. The furnace as claimed in one of the preceding claims, **characterized in that** the surface area of batch material in the furnace is within the range extending from 1 to 25 m², in particular in the range extending from 3 to 20 m².

10. The furnace (1) as claimed in one of the preceding claims, **characterized in that** it is circular.

11. The furnace as claimed in one of the preceding claims, **characterized in that** the ratio of the surface area of molten material to the greatest height of molten material is within the range extending from 2 to 40.

12. The furnace as claimed in one of the preceding claims, **characterized in that** there are three, or a multiple of three, electrodes (3) and they are powered by three-phase power.

13. The furnace as claimed in one of the preceding claims, **characterized in that** the portion of the electrodes in contact with the molten batch materials is made of molybdenum or of tungsten or of graphite.

14. A device for manufacturing glass fibers comprising a furnace from one of the preceding claims and a fiberizing device supplied with molten glass originating from said furnace via a channel (5).

15. A process for manufacturing molten glass comprising the melting of batch materials via electric heating by some electrodes, a coordinated horizontal and cyclic motorized movement of the electrodes being carried out during the steady-state operation of said furnace, **characterized in that** the manufacturing is performed via the furnace from one of the preceding furnace claims, said coordinated movement (7) alternately comprising the mutual coming together of all the electrodes and the mutual moving apart of all the electrodes.

16. The process as claimed in the preceding claim, **characterized in that** the movement is performed so that each electrode carries out 2 to 10 cycles per hour

17. The process as claimed in either of the preceding process claims, **characterized in that** the movement is exclusively horizontal.

18. The process as claimed in either of the preceding process claims, **characterized in that** the movement of at least one electrode is carried out at a speed within the range extending from 50 to 500 mm per minute horizontally.

19. The process as claimed in one of the preceding process claims, **characterized in that** the movement of at least one electrode is carried out at a slow enough speed to retain a complete crust of raw material.

20. The process as claimed in one of the preceding process claims, **characterized in that** the output of the furnace is constant in steady-state operation over at least three days.

21. The process as claimed in one of the preceding process claims, **characterized in that** the batch materials comprise:
SiO₂: 35% to 80% by weight,
Al₂O₃: 0 to 30% by weight,
CaO+MgO: 2% to 35% by weight,
Na₂O+K₂O: 0 to 20% by weight.

22. The process as claimed in one of the preceding process claims, **characterized in that** the molten glass leaves the furnace at a temperature of between 850°C and 1700°C.

23. The process as claimed in one of the preceding process claims, **characterized in that** the batch materials contain at least 2% by weight of iron oxide, or even at least 3% by weight of iron oxide, or even at least 4% by weight of iron oxide.

24. The process as claimed in the preceding claim, **characterized in that** the batch materials comprise:
SiO₂: 35% to 60% by weight,
Al₂O₃: 10% to 30% by weight,
CaO+MgO: 10% to 35% by weight,
Iron oxide: 2% to 10% by weight,
Na₂O+K₂O: 0 to 20% by weight.

25. The process as claimed in either of the two preceding claims, **characterized in that** more than 50% of the mass of the iron oxide contained in the raw materials introduced into the furnace is in Fe₂O₃ form.

26. The process as claimed in the preceding claim, **characterized in that** the molten glass leaves the furnace at a temperature of between 1200°C and 1700°C.
